# EUROPEAN PATENT SPECIFICATION

(11) **EP 4 714 843 B1**
(45) Date of publication and mention of the grant of the patent: **07.10.2026**
(21) Application number: 25200799.2
(22) Date of filing: 08.09.2025
(51) Int. Cl.: B65B 35/44

(54) **BOXING MACHINE AND METHOD FOR BOXING PRODUCTS**
SCHACHTELHERSTELLUNGSMASCHINE UND VERFAHREN ZUM SCHACHTELN VON PRODUKTEN
MACHINE DE MISE EN BOÎTE ET PROCÉDÉ DE MISE EN BOÎTE DE PRODUITS

(30) Priority: 19.09.2024 IT 202400020956
(43) Date of publication of application: 25.03.2026
(73) Proprietor: Fameccanica.Data S.p.A., 66020 San Giovanni Teatino (CH) (IT)
(72) Inventor: GIANSANTE, Antonio, I-66020 San Giovanni Teatino (Chieti) (IT); GALANTE, Dario, I-66020 San Giovanni Teatino (Chieti) (IT)
(74) Representative: Buzzi, Notaro & Antonielli d'Oulx S.p.A.

(56) References cited:
- IT-A1- BO 950 141
- US-A1- 2014 083 062

## Description

### Field of the invention

The present invention relates to a boxing machine and a method for boxing products.

The invention was developed in particular for the application in the production of absorbent sanitary articles, for example for boxing packages of absorbent sanitary articles enclosed in bags coming from a production line.

However, the invention is not limited to this specific field and can be used in all cases where it is necessary to box products at the end of a production line.

### Prior art

Systems for boxing products at the end of a production line represent a crucial element in industrial automation. These systems, often equipped with advanced robotic technology, are designed to ensure efficiency and precision in product packaging. Using automatic handling units equipped with anthropomorphic robots or similar, these systems can handle a wide range of product sizes and types, adapting to the specific needs of each customer. Customization is a fundamental aspect, allowing the systems to be configured to handle variable production volumes and optimally respond to market dynamics. The efficiency of these systems translates into a significant improvement in productivity and the ability to quickly respond to changes in production needs.

These systems use robotic boxing machines designed and built to allow the vertical filling of boxes with previously formed product groups, wherein the products within the groups are arranged with a predetermined orientation determined to optimally exploit the volume of the boxes.

A boxing machine may include: a group conveyor, a first robotic unit configured to form product groups on the group conveyor, and a second robotic unit to pick up product groups from the group conveyor and insert the product groups into respective boxes. An example of a robotic boxing machine is described in EP2096035A1.

The speed of the product loading robots is crucial for the efficiency of boxing machines, as it determines how quickly the products can be processed and boxed. A fast loading robot can significantly increase the throughput of a production line, reducing downtime and maximizing resource utilization.

Cycle time optimization is essential to increase the speed and efficiency of a loading robot. This process involves analyzing and standardizing the various operational phases, allowing for the reduction of dead times and increased productivity. A reduction in time waste in the work cycle considerably improves the robot's speed without compromising system reliability. Therefore, the optimization of loading robot movements is an important factor in increasing the throughput of a boxing line. The optimization of robot movements is particularly important during changes in the format of the packages processed by the boxing machine. IT BO 141 discloses a boxing machine for boxing products.

### Object and summary of the invention

The object of the present invention is to provide a boxing machine and a method for boxing products that allow optimizing the throughput of a boxing machine, particularly when changing the format of the packages processed by the boxing machine.

In particular, the object of the present invention is to increase the efficiency of a boxing machine by optimizing cycle times and reducing unproductive movements of a loading robot.

According to the present invention, this object is achieved by a boxing machine having the features forming the subject of claim 1.

According to another aspect, the invention relates to a method for boxing products having the features forming the subject of claim 6.

Preferred embodiments of the invention form the subject of the dependent claims.

The claims form an integral part of the teaching provided in relation to the invention.

### Brief description of the drawings

The present invention will now be described in detail with reference to the accompanying drawings, provided solely by way of non-limiting example, in which:
- Figure 1 is a schematic plan view of an embodiment of a system for boxing products,
- Figure 2 is a schematic perspective view of some parts of a boxing machine according to the present invention, and
- Figures 3, 4, and 5 are schematic cross-sections along line III-III of Figure 2.

It will be appreciated that the accompanying drawings are schematic and that some components may not be illustrated to simplify the understanding of the figures.

### Detailed description

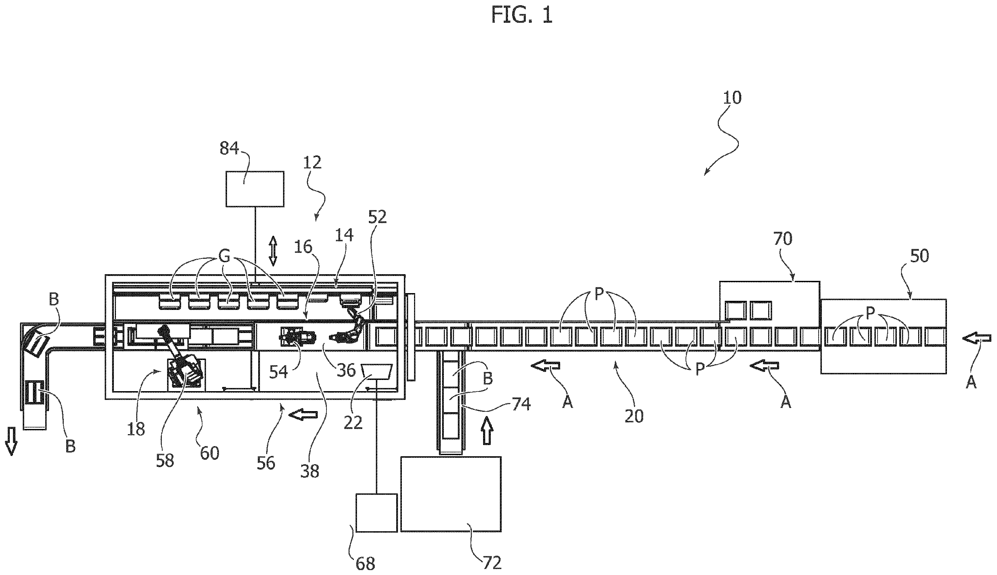

With reference to Figure 1, 10 indicates a system for boxing products P coming from the output of a production line 50. The products P may be, for example, packages of absorbent sanitary articles enclosed in flexible bags.

The system 10 includes a boxing machine 12 configured to form product groups G and to insert such product groups G into respective boxes B.

The system 10 includes a main feed conveyor 20 that transfers the products P from the output of the production line 50 to the boxing machine 12. On the main feed conveyor 20, the products P are aligned with each other in a transport direction A and form a row in which the products P are spaced apart from each other in the transport direction A by a constant distance.

The system 10 may include a buffer 70 for accumulating products P. The buffer 70 can accumulate products P coming from the production line 50 during slowdowns or temporary stops of the boxing machine 12. The products P accumulated in the buffer 70 can be used to fill gaps in the row of products advancing on the main feed conveyor 20, as described in Italian patent application No. 102024000011542 by the same Applicant.

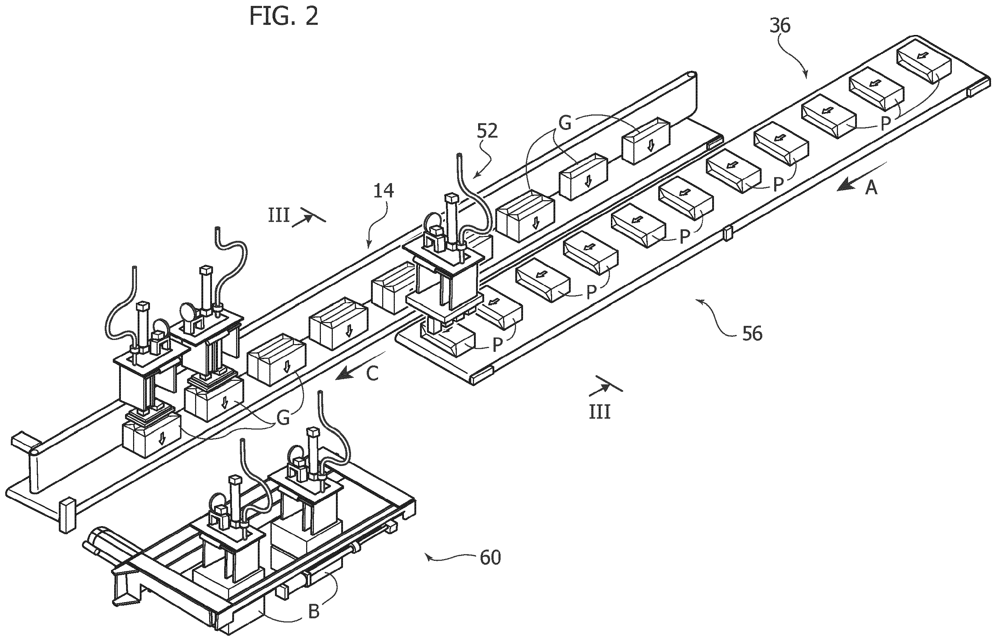

With reference to Figures 1 and 2, the boxing machine 12 includes an input conveyor 36 configured to advance a row of products P aligned with each other in a transport direction A.

The boxing machine 12 includes a group forming section 56, a boxing section 60, and a group conveyor 14 configured to transfer product groups G from the group forming section 56 to the boxing section 60 along a group transport direction C. The group transport direction C may be parallel to the transport direction A.

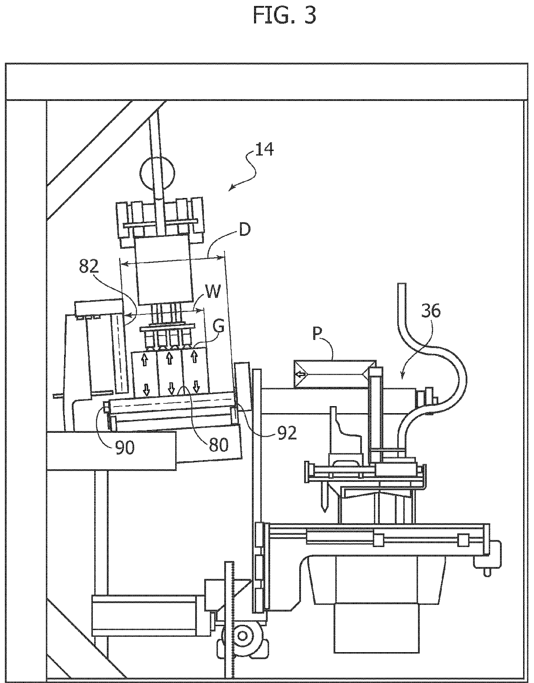

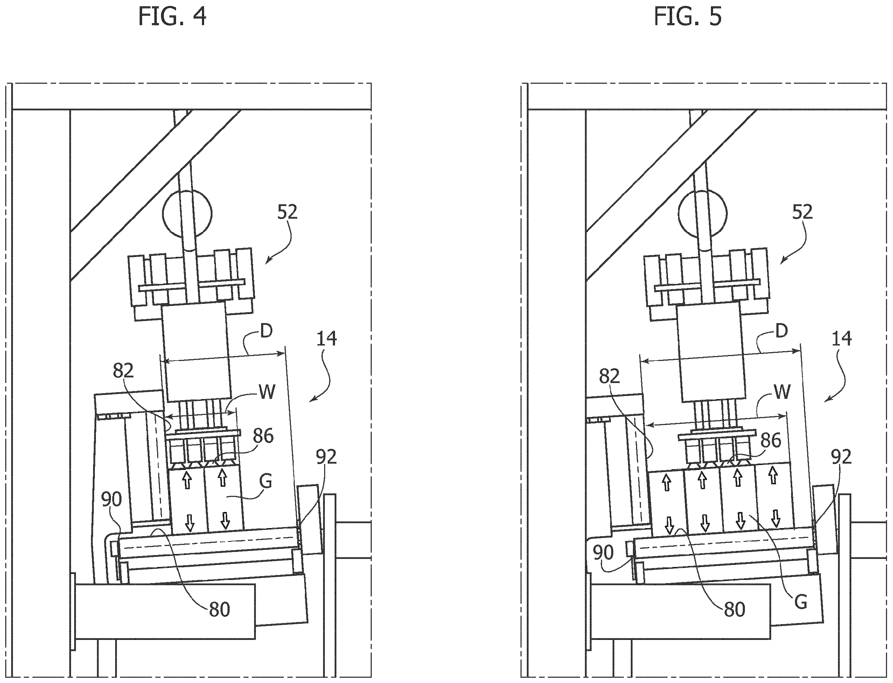

With reference to Figure 1, the boxing machine 12 includes a first robotic unit 16 located in the group forming section 56 and configured to pick up products P from the input conveyor 36 and to deposit the products P picked up from the input conveyor 36 onto the group conveyor 14. With reference to Figures 3-5, the first robotic unit 16 is controlled to form on the group conveyor 14 product groups G having a predetermined width W in a direction orthogonal to the group transport direction C.

The boxing machine 12 includes a second robotic unit 18 configured to pick up product groups G from the group conveyor 14 and insert the product groups G into respective boxes B.

With reference to Figure 1, the system 10 may include a box forming machine 72 that forms boxes B starting from cardboard blanks. The boxes B are transferred from the box forming machine 72 to the boxing machine 12 via a box conveyor 74 that feeds the boxes B to the boxing section 60. In the boxing section 60, the second robotic unit 18 picks up the product groups G from the group conveyor 14 and inserts the product groups G into the boxes B. When the boxes B are full, the box conveyor 74 transports the boxes B outside the boxing machine 12 and sends them to a closing machine. Advantageously, the box conveyor 74 extends below the input conveyor 36, so that the boxes B during transfer to the boxing section 60 do not obstruct the working area of the first robotic unit 16.

With reference to Figures 3-5, the group conveyor 14 includes a lower belt 80 and a side belt 82 movable along the group transport direction C. The lower belt 80 has a proximal edge 90 and a distal edge 92 relative to the side belt 82. A distance D between the side belt 82 and the distal edge 92 in a direction orthogonal to the group transport direction C is adjustable based on the predetermined width W of the product groups G to be formed.

With reference to Figure 1, in one embodiment the boxing machine 12 may include an actuator group 84 configured to vary the distance D between the side belt 82 and the distal edge 92 of the lower belt 80 and a control unit 68 configured to actuate the actuator group 84 to set the distance D to a value corresponding to a predetermined width W of the product groups G to be formed.

With reference to Figures 3-5, in one embodiment the side belt 82 may be orthogonal to the lower belt 80.

In one embodiment, in a section orthogonal to the group transport direction C, the lower belt 80 may be inclined relative to a horizontal plane and the proximal edge 90 may be lower than the distal edge 92.

In one embodiment, the first robotic unit 16 may include at least one anthropomorphic robot 52 equipped with a suction gripping device 86. In the example illustrated in Figure 1, the first robotic unit 16 includes two anthropomorphic robots 52, 54, both controlled by the electronic control unit 68 to pick up products P from the input conveyor 36 and to deposit the products P picked up from the input conveyor 36 onto the group conveyor 14 to form on the group conveyor 14 product groups G having a predetermined width W in a direction orthogonal to the group transport direction C.

With reference to Figure 1, the boxing machine 12 may include a vision device 22 configured to visually inspect a part of the row of products on the input conveyor 36 and to send to the electronic control unit 68 information about the position of the products P. The electronic control unit 68 may be configured to command the anthropomorphic robots 52, 54 based on the information provided by the vision device 22. The vision device 22 may be disposed in a stationary position in the group forming section 56 of the boxing machine 12 or may be disposed on the head of one or both of the anthropomorphic robots 52, 54 located in the group forming section 56 of the boxing machine 12.

In operation, the first robotic unit 16 picks up successive products P located on the input conveyor 36 and deposits them with a predetermined orientation on the group conveyor 14 to form successive product groups G. The pick-and-place cycle involves depositing the first product P of each product group G to be formed with a base face resting on the lower belt 80 and a side face resting against the side belt 82. The subsequent products P of each product group G to be formed are arranged with a base face resting on the lower belt 80 and a side face resting against a side face of a previously deposited product P. The pick-and-place cycle repeats until a product group G is formed consisting of a predetermined number of products P and with a predetermined width W. The product groups G being formed continuously advance along the group conveyor 14.

Figures 3-5 show different positions of the side belt 82 in cases where the product groups G are formed respectively by three, two, and four products P.

The fact that the distance D between the side belt 82 and the distal edge 92 of the lower belt 80 is adjustable based on the predetermined width W of the product groups G to be formed allows reducing the travel amplitudes of the gripping devices 86 of the anthropomorphic robots 52, 54 during each pick-and-place cycle of products.

This allows increasing the speed of the product loading robots and, consequently, the efficiency of the boxing machine as it determines how quickly the products can be processed and boxed.

The higher speed of the loading robots can significantly increase the throughput of the boxing machine, reducing downtime and maximizing resource utilization.

The boxing machine 12 previously described in operation implements a method for boxing products P, comprising:
- advancing a row of products P aligned with each other in a transport direction A along an input conveyor 36,
- picking up products P from the input conveyor 36 by a first robotic unit 16 and depositing the products P picked up from the input conveyor 36 onto a group conveyor 14 having a lower belt 80 and a side belt 82 movable along a group transport direction C, and forming on the group conveyor 14 product groups G having a predetermined width W,
- transferring product groups G from a group forming section 56 to a boxing section 60 along the group transport direction C,
- picking up product groups G from the group conveyor 14 by a second robotic unit 18 and inserting the product groups G into respective boxes B, and
- adjusting a distance D between the side belt 82 and a distal edge 92 of the lower belt 80 along a direction orthogonal to the group transport direction C as a function of the predetermined width W of the product groups G to be formed.

In one embodiment, the method may comprise providing an actuator group 84 configured to vary said distance D and controlling the actuator group 84 by a control unit 68 configured to set said distance D to a value corresponding to a predetermined width W of the product groups G to be formed.

In one embodiment, the method may provide that the side belt 82 is orthogonal to the lower belt 80.

In one embodiment, the method may provide that in a section orthogonal to the group transport direction C the lower belt 80 is inclined relative to a horizontal plane and that the proximal edge 90 is lower than the distal edge 92.

In one embodiment, the method may comprise visually inspecting a part of the row of products on the input conveyor 36 by a vision device 22, and controlling the first robotic unit 16 based on information provided by the vision device 22.

Naturally, while maintaining the principle of the invention, the construction details and embodiments may be widely varied without thereby departing from the scope of the invention as defined by the claims that follow.

## Claims

1. A boxing machine (12) for boxing products (P), comprising:
- an input conveyor (36) configured to advance a row of products (P) aligned with each other in a transport direction (A),
- a group forming section (56),
- a boxing section (60),
- a group conveyor (14), configured to transfer product groups (G) from the group forming section (56) to the boxing section (60) along a group transport direction (C),
- a first robotic unit (16) located in the group forming section (56) and configured to pick up products (P) from said input conveyor (36) and to deposit the products (P) picked up from the input conveyor (36) onto the group conveyor (14) to form on the group conveyor (14) product groups (G) having a predetermined width (W) in a direction orthogonal to the group transport direction (C), and
- a second robotic unit (18) configured to pick up product groups (G) from said group conveyor (14) and insert said product groups (G) into respective boxes (B),
**characterized in that** said group conveyor (14) comprises a lower belt (80) and a side belt (82) movable along said group transport direction (C), wherein the lower belt (80) has a proximal edge (90) and a distal edge (92) relative to said side belt (82), and wherein a distance (D) between the side belt (82) and said distal edge (92) in a direction orthogonal to said group transport direction (C) is adjustable as a function of the predetermined width (W) of the product groups (G) to be formed.

2. The machine of claim 1, comprising an actuator group (84) configured to vary said distance (D) and a control unit (68) configured to actuate said actuator group (84) to set said distance (D) to a value corresponding to a predetermined width (W) of the product groups (G) to be formed.

3. The machine of any of the preceding claims, wherein said side belt (82) is orthogonal to said lower belt (80).

4. The machine of any of the preceding claims, wherein in a section orthogonal to said group transport direction (C) said lower belt (80) is inclined relative to a horizontal plane and wherein said proximal edge (90) is lower than said distal edge (92).

5. The machine of any of the preceding claims, comprising a vision device (22) configured to visually inspect a part of the row of products on said input conveyor (36), and an electronic control unit (68) configured to control said first robotic unit (16) based on information provided by the vision device (22).

6. A method for boxing products (P), comprising:
- advancing a row of products (P) aligned with each other in a transport direction (A) along an input conveyor (36),
- picking up products (P) from said input conveyor (36) by a first robotic unit (16) and depositing the products (P) picked up from the input conveyor (36) onto a group conveyor (14) having a lower belt (80) and a side belt (82) movable along a group transport direction (C), and forming on the group conveyor (14) product groups (G) having a predetermined width (W),
- transferring product groups (G) from a group forming section (56) to a boxing section (60) along said group transport direction (C),
- picking up product groups (G) from said group conveyor (14) by a second robotic unit (18) and inserting said product groups (G) into respective boxes (B), and
- adjusting a distance (D) between said side belt (82) and a distal edge (92) of said lower belt (80) along a direction orthogonal to said group transport direction (C) as a function of the predetermined width (W) of the product groups (G) to be formed.

7. The method of claim 6, comprising providing an actuator group (84) configured to vary said distance (D) and controlling said actuator group (84) by a control unit configured to set said distance (D) to a value corresponding to a predetermined width (W) of the product groups (G) to be formed.

8. The method of claim 6 or claim 7, wherein said side belt (82) is orthogonal to said lower belt (80).

9. The method of any of claims 6-8, wherein in a section orthogonal to said group transport direction (C) said lower belt (80) is inclined relative to a horizontal plane and wherein said proximal edge (90) is lower than said distal edge (92).

10. The method of any of claims 6-9, comprising visually inspecting a part of the row of products on said input conveyor (36) by a vision device (22), and controlling said first robotic unit (16) based on information provided by said vision device (22).

## Patentansprüche

1. Verpackungsmaschine (12) zum Verpacken von Produkten (P) in Schachteln, umfassend:
- einen Eingangsförderer (36), der dazu eingerichtet ist, eine Reihe von Produkten (P), die miteinander in einer Transportrichtung (A) ausgerichtet sind, vorwärts zu bewegen,
- einen Gruppenbildungsabschnitt (56),
- einen Verpackungsabschnitt (60),
- einen Gruppenförderer (14), der dazu eingerichtet ist, Produktgruppen (G) von dem Gruppenbildungsabschnitt (56) zu dem Verpackungsabschnitt (60) entlang einer Gruppentransportrichtung (C) zu überführen,
- eine erste Robotereinheit (16), die in dem Gruppenbildungsabschnitt (56) angeordnet und dazu eingerichtet ist, Produkte (P) von dem Eingangsförderer (36) aufzunehmen und die von dem Eingangsförderer (36) aufgenommenen Produkte (P) auf dem Gruppenförderer (14) abzulegen, um auf dem Gruppenförderer (14) Produktgruppen (G) mit einer vorbestimmten Breite (W) in einer Richtung orthogonal zu der Gruppentransportrichtung (C) zu bilden, und
- eine zweite Robotereinheit (18), die dazu eingerichtet ist, Produktgruppen (G) von dem Gruppenförderer (14) aufzunehmen und die Produktgruppen (G) in jeweilige Schachteln (B) einzusetzen,
**dadurch gekennzeichnet, dass** der Gruppenförderer (14) ein unteres Band (80) und ein Seitenband (82) umfasst, die entlang der Gruppentransportrichtung (C) bewegbar sind, wobei das untere Band (80) einen proximalen Rand (90) und einen distalen Rand (92) relativ zu dem Seitenband (82) aufweist, und wobei ein Abstand (D) zwischen dem Seitenband (82) und dem distalen Rand (92) in einer Richtung orthogonal zu der Gruppentransportrichtung (C) in Abhängigkeit von der vorbestimmten Breite (W) der zu bildenden Produktgruppen (G) einstellbar ist.

2. Maschine nach Anspruch 1, umfassend eine Aktuatorgruppe (84), die dazu eingerichtet ist, den Abstand (D) zu verändern, und eine Steuereinheit (68), die dazu eingerichtet ist, die Aktuatorgruppe (84) zu betätigen, um den Abstand (D) auf einen Wert einzustellen, der einer vorbestimmten Breite (W) der zu bildenden Produktgruppen (G) entspricht.

3. Maschine nach einem der vorhergehenden Ansprüche, wobei das Seitenband (82) orthogonal zu dem unteren Band (80) ist.

4. Maschine nach einem der vorhergehenden Ansprüche, wobei in einem Schnitt orthogonal zu der Gruppentransportrichtung (C) das untere Band (80) relativ zu einer horizontalen Ebene geneigt ist und wobei der proximale Rand (90) niedriger ist als der distale Rand (92).

5. Maschine nach einem der vorhergehenden Ansprüche, umfassend eine Bildverarbeitungsvorrichtung (22), die dazu eingerichtet ist, einen Teil der Reihe von Produkten auf dem Eingangsförderer (36) visuell zu prüfen, und eine elektronische Steuereinheit (68), die dazu eingerichtet ist, die erste Robotereinheit (16) auf Grundlage von Informationen zu steuern, die von der Bildverarbeitungsvorrichtung (22) bereitgestellt werden.

6. Verfahren zum Verpacken von Produkten (P) in Schachteln, umfassend:
- Vorwärtsbewegen einer Reihe von Produkten (P), die miteinander in einer Transportrichtung (A) ausgerichtet sind, entlang eines Eingangsförderers (36),
- Aufnehmen von Produkten (P) von dem Eingangsförderer (36) durch eine erste Robotereinheit (16) und Ablegen der von dem Eingangsförderer (36) aufgenommenen Produkte (P) auf einem Gruppenförderer (14), der ein unteres Band (80) und ein Seitenband (82) aufweist, die entlang einer Gruppentransportrichtung (C) bewegbar sind, und Bilden von Produktgruppen (G) mit einer vorbestimmten Breite (W) auf dem Gruppenförderer (14),
- Überführen von Produktgruppen (G) von einem Gruppenbildungsabschnitt (56) zu einem Verpackungsabschnitt (60) entlang der Gruppentransportrichtung (C),
- Aufnehmen von Produktgruppen (G) von dem Gruppenförderer (14) durch eine zweite Robotereinheit (18) und Einsetzen der Produktgruppen (G) in jeweilige Schachteln (B), und
- Einstellen eines Abstandes (D) zwischen dem Seitenband (82) und einem distalen Rand (92) des unteren Bandes (80) entlang einer Richtung orthogonal zu der Gruppentransportrichtung (C) in Abhängigkeit von der vorbestimmten Breite (W) der zu bildenden Produktgruppen (G).

7. Verfahren nach Anspruch 6, umfassend das Bereitstellen einer Aktuatorgruppe (84), die dazu eingerichtet ist, den Abstand (D) zu verändern, und das Steuern der Aktuatorgruppe (84) durch eine Steuereinheit, die dazu eingerichtet ist, den Abstand (D) auf einen Wert einzustellen, der einer vorbestimmten Breite (W) der zu bildenden Produktgruppen (G) entspricht.

8. Verfahren nach Anspruch 6 oder Anspruch 7, wobei das Seitenband (82) orthogonal zu dem unteren Band (80) ist.

9. Verfahren nach einem der Ansprüche 6 bis 8, wobei in einem Schnitt orthogonal zu der Gruppentransportrichtung (C) das untere Band (80) relativ zu einer horizontalen Ebene geneigt ist und wobei der proximale Rand (90) niedriger ist als der distale Rand (92).

10. Verfahren nach einem der Ansprüche 6 bis 9, umfassend das visuelle Prüfen eines Teils der Reihe von Produkten auf dem Eingangsförderer (36) durch eine Bildverarbeitungsvorrichtung (22) und das Steuern der ersten Robotereinheit (16) auf Grundlage von Informationen, die von der Bildverarbeitungsvorrichtung (22) bereitgestellt werden.

## Revendications

1. Machine de mise en boîtes (12) pour mettre en boîtes des produits (P), comprenant :
- un convoyeur d'entrée (36) configuré pour faire avancer une rangée de produits (P) alignés les uns avec les autres dans une direction de transport (A),
- une section de formation de groupes (56),
- une section de mise en boîtes (60),
- un convoyeur de groupes (14), configuré pour transférer des groupes de produits (G) de la section de formation de groupes (56) à la section de mise en boîtes (60) le long d'une direction de transport de groupes (C),
- une première unité robotisée (16) située dans la section de formation de groupes (56) et configurée pour prélever des produits (P) dudit convoyeur d'entrée (36) et pour déposer les produits (P) prélevés du convoyeur d'entrée (36) sur le convoyeur de groupes (14), afin de former sur le convoyeur de groupes (14) des groupes de produits (G) ayant une largeur prédéterminée (W) dans une direction orthogonale à la direction de transport de groupes (C), et
- une seconde unité robotisée (18) configurée pour prélever des groupes de produits (G) dudit convoyeur de groupes (14) et insérer lesdits groupes de produits (G) dans des boîtes respectives (B),
**caractérisée en ce que** ledit convoyeur de groupes (14) comprend une bande inférieure (80) et une bande latérale (82) mobiles le long de ladite direction de transport de groupes (C), dans laquelle la bande inférieure (80) présente un bord proximal (90) et un bord distal (92) par rapport à ladite bande latérale (82), et dans laquelle une distance (D) entre la bande latérale (82) et ledit bord distal (92) dans une direction orthogonale à ladite direction de transport de groupes (C) est réglable en fonction de la largeur prédéterminée (W) des groupes de produits (G) à former.

2. Machine selon la revendication 1, comprenant un groupe d'actionnement (84) configuré pour faire varier ladite distance (D) et une unité de commande (68) configurée pour actionner ledit groupe d'actionnement (84) afin de régler ladite distance (D) à une valeur correspondant à une largeur prédéterminée (W) des groupes de produits (G) à former.

3. Machine selon l'une quelconque des revendications précédentes, dans laquelle ladite bande latérale (82) est orthogonale à ladite bande inférieure (80).

4. Machine selon l'une quelconque des revendications précédentes, dans laquelle, dans une section orthogonale à ladite direction de transport de groupes (C), ladite bande inférieure (80) est inclinée par rapport à un plan horizontal, et dans laquelle ledit bord proximal (90) est plus bas que ledit bord distal (92).

5. Machine selon l'une quelconque des revendications précédentes, comprenant un dispositif de vision (22) configuré pour inspecter visuellement une partie de la rangée de produits sur ledit convoyeur d'entrée (36), et une unité de commande électronique (68) configurée pour commander ladite première unité robotisée (16) sur la base d'informations fournies par le dispositif de vision (22).

6. Procédé de mise en boîtes de produits (P), comprenant :
- l'avancement d'une rangée de produits (P) alignés les uns avec les autres dans une direction de transport (A) le long d'un convoyeur d'entrée (36),
- le prélèvement de produits (P) dudit convoyeur d'entrée (36) par une première unité robotisée (16) et le dépôt des produits (P) prélevés du convoyeur d'entrée (36) sur un convoyeur de groupes (14) ayant une bande inférieure (80) et une bande latérale (82) mobiles le long d'une direction de transport de groupes (C), et la formation sur le convoyeur de groupes (14) de groupes de produits (G) ayant une largeur prédéterminée (W),
- le transfert de groupes de produits (G) d'une section de formation de groupes (56) à une section de mise en boîtes (60) le long de ladite direction de transport de groupes (C),
- le prélèvement de groupes de produits (G) dudit convoyeur de groupes (14) par une seconde unité robotisée (18) et l'insertion desdits groupes de produits (G) dans des boîtes respectives (B), et
- le réglage d'une distance (D) entre ladite bande latérale (82) et un bord distal (92) de ladite bande inférieure (80) le long d'une direction orthogonale à ladite direction de transport de groupes (C) en fonction de la largeur prédéterminée (W) des groupes de produits (G) à former.

7. Procédé selon la revendication 6, comprenant la fourniture d'un groupe d'actionnement (84) configuré pour faire varier ladite distance (D) et la commande dudit groupe d'actionnement (84) par une unité de commande configurée pour régler ladite distance (D) à une valeur correspondant à une largeur prédéterminée (W) des groupes de produits (G) à former.

8. Procédé selon la revendication 6 ou la revendication 7, dans lequel ladite bande latérale (82) est orthogonale à ladite bande inférieure (80).

9. Procédé selon l'une quelconque des revendications 6 à 8, dans lequel, dans une section orthogonale à ladite direction de transport de groupes (C), ladite bande inférieure (80) est inclinée par rapport à un plan horizontal, et dans lequel ledit bord proximal (90) est plus bas que ledit bord distal (92).

10. Procédé selon l'une quelconque des revendications 6 à 9, comprenant l'inspection visuelle d'une partie de la rangée de produits sur ledit convoyeur d'entrée (36) par un dispositif de vision (22), et la commande de ladite première unité robotisée (16) sur la base d'informations fournies par ledit dispositif de vision (22).
